# EUROPÄISCHE PATENTANMELDUNG

(11) **EP 3 543 513 A1**
(43) Veröffentlichungstag der Anmeldung: **25.09.2019**
(21) Anmeldenummer: 19159076.9
(22) Anmeldetag: 25.02.2019
(51) Int. Cl.: F02D 35/02, F02D 41/00, F02D 41/40, F02D 19/06, F02D 19/10, F02D 41/04, F02D 41/30

(54) **VERFAHREN UND STEUERUNGSEINRICHTUNG ZUM BETREIBEN EINES MOTORS**

(30) Priorität: 22.03.2018 DE 102018106894
(71) Anmelder: MAN Energy Solutions SE, 86153 Augsburg (DE)
(72) Erfinder: Kunkel, Christian, 86161 Augsburg (DE); Auer, Matthias, 80539 München (DE); Hagl, Paul, 86450 Altenmünster (DE); Wloka, Johann, 81735 München (DE)

(57) **Zusammenfassung**

Verfahren zum Betreiben eines vorzugsweise als Dual-Fuel-Motor ausgebildeten Motors, der mehrere Zylinder (2) umfasst, wobei zur Verbrennung eines Gas/Luft-Gemischs aus einem gasförmigen Kraftstoff und Luft das Gas/Luft-Gemisch unter Verwendung eines Zündfluids in den Zylindern (2) gezündet wird, wobei im Bereich jedes Zylinders (2) in einem Arbeitstakt desselben zuerst der gasförmige Kraftstoff und die Luft des Gas/Luft-Gemischs und nachfolgend zur Steuerung des Verbrennungsbeginns das Zündfluid über eine Haupteinspritzung in den jeweiligen Zylinder (2) eingebracht wird, und wobei in dem jeweiligen Arbeitstakt nach dem Einbringen des Gas/Luft-Gemischs in den jeweiligen Zylinder (2) und vor der Haupteinspritzung ebenfalls Zündfluid über mindestens eine Voreinspritzung in den jeweiligen Zylinder (2) eingebracht wird, wobei die Einspritzmenge der oder jeder Voreinspritzung in Abhängigkeit vom Zylinderdruck bestimmt wird.

## Beschreibung

Die Erfindung betrifft ein Verfahren und eine Steuerungseinrichtung zum Betreiben eines Motors.

Aus der Praxis sind sogenannte Dual-Fuel-Motoren bekannt, in denen einerseits in einem Flüssigkraftstoffbetriebsmodus ein flüssiger Kraftstoff wie Diesel und andererseits in einem Gaskraftstoffbetriebsmodus ein gasförmiger Kraftstoff wie Erdgas verbrannt werden kann. Im Gaskraftstoffbetriebsmodus eines solchen Dual-Fuel-Motors wird in der Regel ein mageres Gas/Luft-Gemisch in die Zylinder des Motors eingebracht und durch die Zündenergie eines ebenfalls in die Zylinder eingebrachten Zündfluids gezündet. So verfügt ein Dual-Fuel-Motor über ein Zündfluid-Einspritzsystem, wobei ein Zündfluid-Einspritzsystem eine für mehrere Zylinder gemeinsame Zündfluid-Förderpumpe, einen für die mehreren Zylinder gemeinsamen Zündfluid-Speicher und für die mehreren Zylinder individuelle Zündfluid-Injektoren umfasst. Das Zündfluid wird dabei nach der Praxis in den jeweiligen Zylinder kurz vor einem sogenannten oberen Totpunkt eines Kolbens des jeweiligen Zylinders in den Brennraum des jeweiligen Zylinders eingebracht, und zwar in bzw. mit einer einzigen Einspritzung je Arbeitstakt des jeweiligen Zylinders.

Aus der DE 10 2014 017 124 A1 ist es bekannt, dass in dem jeweiligen Arbeitstakt des jeweiligen Zylinders das Zündfluid in mindestens zwei aufeinanderfolgenden Einspritzungen in den jeweiligen Zylinder eingebracht wird.

Hiervon ausgehend liegt der Erfindung die Aufgabe zu Grunde, ein neuartiges Verfahren und eine Steuerungseinrichtung zum Betreiben eines Motors zu schaffen.

Diese Aufgabe wird nach einem ersten Aspekt durch ein Verfahren gemäß Anspruch 1 gelöst.

Hiernach wird in dem jeweiligen Arbeitstakt nach dem Einbringen des Gas/Luft-Gemischs in den jeweiligen Zylinder und vor der Haupteinspritzung ebenfalls Zündfluid über mindestens eine Voreinspritzung in den jeweiligen Zylinder eingebracht, wobei die Einspritzmenge der oder jeder Voreinspritzung in Abhängigkeit vom Zylinderdruck bestimmt wird.

Die Haupteinspritzung des Zündfluids in den jeweiligen Zylinder dient der eigentlichen Zündauslösung bzw. Zündsteuerung des Gas/Luft-Gemischs in der Brennkammer des Zylinders. Die oder jede Voreinspritzung, die vor der Haupteinspritzung im jeweiligen Arbeitstakt erfolgt, dient der Vorkonditionierung des eigentlichen Zündvorgangs, um das Zündfluid optimal im Brennraum des jeweiligen Zylinders zu verteilen. Dadurch, dass die Einspritzmenge der oder jeder Voreinspritzung in Abhängigkeit vom Zylinderdruck bestimmt wird, kann das Zündfluid optimal in der Brennkammer verteilt werden, ohne en Motorbetrieb zu beinträchtigen. Insgesamt kann die Verbrennung des Gas/Luft-Gemischs mit höherem Wirkungsgrad und höherer Verbrennungsstabilität erfolgen.

Nach einer vorteilhaften Weiterbildung wird die Einspritzmenge der oder jeder Voreinspritzung in Abhängigkeit vom Zylinderdruck derart bestimmt, dass sich das Zündfluid in einem Brennraum des jeweiligen Zylinders maximal ausbreitet ohne die Zylinderlaufbuchse desselben zu benetzen. Dieser Weiterbildung liegt die Erkenntnis zugrunde, dass die Zylinderlaufbuchse vom Zündfluid nicht benetzt werden sollte. Eine Wandanlagerung des Zündfluids an der Zylinderlaufbuchse kann zu einer unerwünschten Ölverdünnung führen. Dies kann durch die definierte Bestimmung der Einspritzmenge in Abhängigkeit vom Zylinderdruck vermieden werden. Insgesamt kann die Verbrennung des Gas/Luft-Gemischs mit höherem Wirkungsgrad und höherer Verbrennungsstabilität erfolgen.

Nach einer vorteilhaften Weiterbildung wird die Einspritzmenge der jeweiligen Voreinspritzung in Abhängigkeit von dem Zylinderdruck bestimmt, der zum Zeitpunkt der jeweiligen Voreinspritzung im jeweiligen Zylinder herrscht. Die Verbrennung des Gas/Luft-Gemischs kann mit höherem Wirkungsgrad und höherer Verbrennungsstabilität erfolgen.

Nach einer vorteilhaften Weiterbildung wird in dem jeweiligen Arbeitstakt das Zündfluid in mindestens zwei aufeinanderfolgenden Voreinspritzungen in den jeweiligen Zylinder eingebracht. Durch das Einbringen des Zündfluids in mindestens zwei aufeinanderfolgenden Voreinspritzungen vor der eigentlichen Haupteinspritzung kann die Verteilung des Zündfluids in der Brennkammer des Zylinders weiter verbessert werden. Insgesamt kann die Verbrennung des Gas/Luft-Gemischs mit höherem Wirkungsgrad und höherer Verbrennungsstabilität erfolgen.

Nach einer vorteilhaften Weiterbildung der Erfindung erfolgt in dem jeweiligen Arbeitstakt die oder jede Voreinspritzung in einem Kurbelwellenwinkelbereich zwischen 240°KW vor OT und 40°KW vor OT, bevorzugt zwischen 200°KW vor OT und 40°KW vor OT, besonders bevorzugt zwischen 160°KW vor OT und 40°KW vor OT. Das Einbringen des Zündfluids in der oder jeder Voreinspritzung in dem obigen Kurbelwellenwinkelbereich ist besonders bevorzugt. Da insbesondere relativ weit vor OT, zum Beispiel bei 240° kW vor OT, der Zylinderdruck relativ gering ist, wird dann eine relativ geringe Einspritzmenge in der jeweiligen Voreinspritzung in den Zylinder eingebracht, um eine Benetzung der Zylinderlaufbuchse mit dem Zündfluid sicher auszuschließen. Die Verbrennung des Gas/Luft-Gemischs kann mit höherem Wirkungsgrad und höherer Verbrennungsstabilität erfolgen.

Diese Aufgabe wird nach einem zweiten Aspekt durch ein Verfahren gemäß Anspruch 8 gelöst. Die Steuerungseinrichtung zur Durchführung des Verfahrens ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Blockschaltbild eines als Dual-Fuel-Motor ausgebildeten Motors;
- Fig. 2:: ein Diagramm zur Verdeutlichung des Verfahrens zum Betreiben eines vorzugsweise als Dual-Fuel-Motor ausgebildeten Motors.

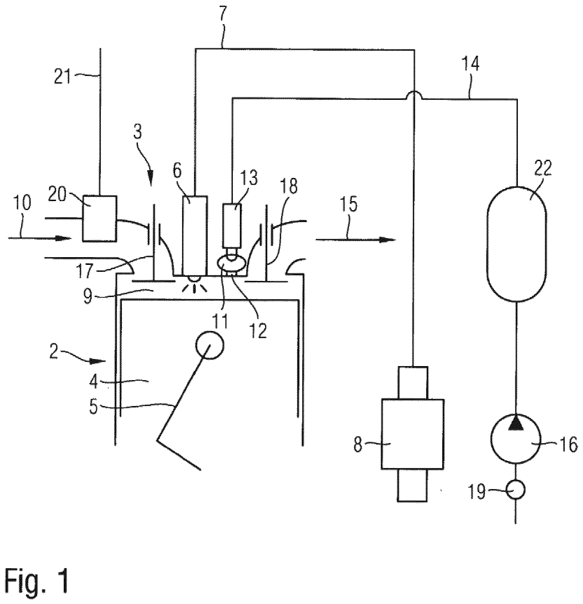

In Fig. 1 sind Baugruppen eines Dual-Fuel-Motors gezeigt, wobei Fig. 1 einen Zylinder 2 eines solchen Motors zeigt.

Der Zylinder 2 verfügt über einen Zylinderkopf 3. Im Zylinder 2 bewegt sich ein Kolben 4, der von einem Pleuel 5 geführt ist, auf und ab. Im Zylinderkopf 3 ist ein Kraftstoffinjektor 6 befestigt, durch den flüssiger Kraftstoff, insbesondere Dieselkraftstoff, über eine Kraftstoffleitung 7 von einer Kraftstoffpumpe 8 aus direkt in einen Brennraum 9 des Zylinders 2 eingespritzt werden kann. Die Kraftstoffpumpe 8 wird dabei vorzugsweise ausgehend von einer Kurbelwelle des Motors angetrieben. Der Kraftstoffinjektor 6, die Kraftstoffleitung 7 sowie die Kraftstoffpumpe 8 sind Elemente einer Kraftstoffzuführeinrichtung, die der Zuführung von flüssigem Kraftstoff in den Brennraum 9 des Zylinders 2 dient. Diese Kraftstoffzuführeinrichtung ist dann aktiv, wenn im Zylinder 2 des Dual-Fuel-Motors als Kraftstoff flüssiger Kraftstoff, insbesondere Diesel, verbrannt wird, also in einem Flüssigkraftstoffbetriebsmodus des Dual-Fuel-Motors.

Zur Verbrennung des flüssigen Kraftstoffs ist in den jeweiligen Zylinder 2 des Dual-Fuel-Motors weiter Ladeluft 10 über ein Einlassventil 17 einbringbar, wobei bei der Verbrennung des Kraftstoffs entstehendes Abgas 15 über ein Auslassventil 18 vom Zylinder 2 abgeführt werden kann.

Im Brennraum 9 des Zylinders 2 des Dual-Fuel-Motors kann in einem Gaskraftstoffbetriebsmodus als Kraftstoff auch Gas verbrannt werden. Hierzu umfasst der Dual-Fuel-Motor eine Mischbildungseinheit 20, in der ein Gemisch aus Verbrennungsluft 10 und Gas, welches der Gemischbildungseinheit 20 über eine Gasversorgungsleitung 21 bereitgestellt wird, gebildet wird, wobei dieses Gas-LuftGemisch in den Brennraum 9 des Zylinders 2 über das Einlassventil 17 eingebracht wird. Auch bei der Verbrennung von Gases entsteht Abgas 15, welches über das Auslassventil 18 vom Zylinder 2 abgeführt werden kann.

Zur Zündung des Gas-Luft-Gemischs im Gaskraftstoffbetriebsmodus des Zylinders 2 des Dual-Fuel-Motors dient Zündfluid, welches in einen weiteren Brennraum 11 des Zylinders mit Hilfe eines Zündfluid-Injektors 13 eingebracht werden kann, wobei dieser weitere Brennraum 11 des Zylinders 2 mit dem Brennraum 9 über mindestens einen Verbindungskanal 12 gekoppelt ist. Es sei darauf hingewiesen, dass das Zündfluid auch direkt in den Brennraum 9 eingebracht werden kann.

Der Zündfluid-Injektor 13 des in Fig. 1 gezeigten Zylinders 2 ist Bestandteil eines Zündfluid-Einspritzsystems des Motors, wobei das Zündfluid-Einspritzsystem für jeden Zylinder 2 des Motors einen individuellen Zündfluid-Injektor 13 umfasst. Die Zündfluid-Injektoren 13 sind über eine Zündfluid-Leitung 14 ausgehend von einem gemeinsamen Zündfluid-Speicher 22 des Zündfluid-Einspritzsystems mit Zündfluid versorgbar, wobei dem Zündfluid-Speicher 22 eine Zündfluid-Förderpumpe 16 zugeordnet ist, die den Zündfluid-Speicher 22 mit Zündfluid versorgt. Bei der Zündfluid-Förderpumpe 16 handelt es sich vorzugsweise um eine elektrisch betriebene Hochdruckpumpe. Der Zündfluid-Förderpumpe 16 ist dabei eine Saugdrossel 19 zugeordnet.

Die hier vorliegende Erfindung betrifft nun solche Details, mit Hilfe derer im Gaskraftstoffbetriebsmodus des Dual-Fuel-Motors das Gas bzw. das Gas/LuftGemisch optimal mit hohem Wirkungsgrad verbrannt werden kann.

Im Gaskraftstoffbetriebsmodus des Dual-Fuel-Motors wird in jedem Arbeitstakt eines Zylinders 2 in den Brennraum 9 des jeweiligen Zylinders 2 zunächst das Gas/Luft-Gemisch und anschließend das Zündfluid in den jeweiligen Zylinder 2 eingebracht wird.

Dabei wird das Zündfluid je Arbeitstakt des jeweiligen Zylinders 2 in einer Haupteinspritzung in den jeweiligen Zylinder 2 eingebracht, die der Zündauslösung bzw. Zündsteuerung des Gas/Luft-Gemischs dient. Für die Haupteinspritzung liegt der Einspritzbeginn in einem Kurbelwellenwinkelbereich zwischen 40°KW vor OT und 20°KW vor OT. KW steht für Kurbelwellenwinkel und OT steht für den oberen Totpunkt des Kolbens 4 des jeweiligen Zylinders 2.

Zwischen dem Einspritzbeginn und dem Einspritzende einer Zündfluid-Haupteinspritzung vergehen bzw. liegen typischerweise 4°KW bis 8°KW. Eine Zündfluid-Haupteinspritzung, die bei 40°KW vor OT beginnt, endet demnach typischerweise zwischen 36°KW vor OT und 32°KW vor OT.

Im jeweiligen Arbeitstakt der jeweiligen Haupteinspritzung wird Zündfluid ebenfalls über mindestens eine Voreinspritzung in den jeweiligen Zylinder eingebracht.

In dem jeweiligen Arbeitstakt erfolgt dabei die oder jede Voreinspritzung in einem Kurbelwellenwinkelbereich zwischen 240°KW vor OT und 40°KW vor OT, bevorzugt in einem Kurbelwellenwinkelbereich zwischen 200°KW vor OT und 40°KW vor OT, besonders bevorzugt in einem Kurbelwellenwinkelbereich zwischen 160°KW vor OT und 40°KW vor OT, wobei sich die obigen Kurbelwellenwinkelbereiche wiederum jeweils auf den Einspritzbeginn der jeweiligen Voreinspritzung beziehen. Das Einspritzende der jeweiligen letzten Voreinspritzung liegt damit vor dem Einspritzbeginn der Haupteinspritzung in ein und demselben Arbeitstakt.

Die Einspritzmenge der jeweiligen Voreinspritzung wird dabei in Abhängigkeit vom Zylinderdruck bestimmt, der zum Zeitpunkt der jeweiligen Voreinspritzung im jeweiligen Zylinder herrscht.

Dabei wird die Einspritzmenge derart bestimmt, dass sich das Zündfluid optimal in dem Brennraum 9 des jeweiligen Zylinders 2 verteilt, um eine Verbrennung des Gas/Luft-Gemischs mit optimalem Wirkungsgrad und optimaler Verbrennungsstabilität zu gewährleisten. Dabei wird durch die Bestimmung der Einspritzmenge je Voreinspritzung in Abhängigkeit vom Zylinderdruck insbesondere vermieden, dass das Zündfluid eine Lauffläche einer Zylinderlaufbuchse für den Kolben 4 des Zylinders 2 benetzt. Hierdurch kann insbesondere eine Ölverdünnung vermieden werden. Das Gas/Luft-Gemisch kann optimal in dem Brennraum 9 des jeweiligen Zylinders 2 verbrannt werden.

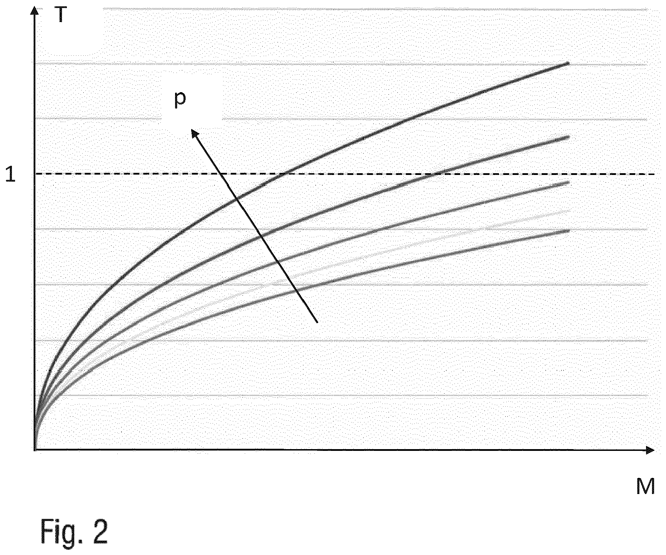

Die Bestimmung der Zündfluideinspritzmenge in der jeweiligen Voreinspritzung abhängig vom Druck zeigt Fig. 2. So ist in Fig. 2 über der Einspritzmenge M eine Einbringtiefe T des Zündfluids im Brennraum 9 eines Zylinders 2 gezeigt, und zwar für unterschiedliche Zylinderdrücke p. Je geringer der Zylinderdruck p im Zylinder 2 ist, desto geringer wird demnach die Einspritzmenge M gewählt, um eine Benetzungsgefahr für die Lauffläche der Zylinderlaufbuchse zu vermeiden.

Dabei ist in Fig. 2 über der Einspritzmenge M eine relative bzw. normierte Einbringtiefe T gezeigt, wobei eine normierte Einbringtiefe T von 1 gerade zu einer Benetzung der Zylinderlaufbuchse mit Zündöl führen würde.

Da eine solche Benetzung vermieden werden soll, wird abhängig vom Zylinderdruck p immer eine Einspritzmenge M gewählt, mit der die relative bzw. normierte Einbringtiefe T kleiner 1 ist.

Vorzugsweise wird das Zündfluid zusätzlich zu der den eigentlichen Zündvorgang auslösenden Haupteinspritzung in mehreren Voreinspritzungen, die nacheinander erfolgen, in den Brennraum des jeweiligen Zylinders 2 eingebracht, wobei für jede dieser Voreinspritzungen die Einspritzmenge individuell in Abhängigkeit vom jeweiligen herrschenden Zylinderdruck bestimmt wird.

Dabei ist es möglich, den jeweiligen Zylinderdruck mit Hilfe eines Drucksensors messtechnisch zu erfassen und dann abhängig von einem gemessenen Zylinderdruck die jeweilige Zündfluid-Einspritzmenge für die jeweilige Voreinspritzung zu bestimmen.

Im Unterschied hierzu ist es jedoch auch möglich, den Zylinderdruck abhängig vom jeweiligen Ladedruck und einer jeweiligen Kolbenstellung zu bestimmen, wobei dann Ladedruck und Kolbenstellung als Messgrößen vorliegen. Abhängig vom Ladedruck und der Kolbenstellung kann der Zylinderdruck errechnet werden, um dann abhängig von einem errechneten Zylinderdruck die jeweilige Zündfluid-Einspritzmenge für die jeweilige Voreinspritzung zu bestimmen.

Um die entsprechende Einspritzmenge je Voreinspritzung bereitzustellen, wird der Zündfluid-Injektor 13 des jeweiligen Zylinders 2 ausgehend von einem Steuergerät entsprechend bestromt, nämlich durch Bestromung eines Aktuators des Zündfluid-Injektor 13. Die Bestromungsdauer und damit letztendlich die Zündfluid-Einspritzmenge je Voreinspritzung ist vom Zylinderdruck des jeweiligen Zylinders 2 abhängig ist.

Durch die oder jede erfindungsgemäße Voreinspritzung vor der den eigentlichen Zündvorgang auslösenden Haupteinspritzung im jeweiligen Arbeitstakt des Zylinders kann die Verbrennung des Gas/Luft-Gemischs im Zylinder 2 verbessert werden, insbesondere wird der Wirkungsgrad und Verbrennungsstabilität erhöht.

Es ist möglich, eine Gesamteinspritzmenge für alle Voreinspritzungen vorzugeben und die Gesamteinspritzmenge im Sinne einer Regelung über mehrere Voreinspritzungen bereitzustellen, wobei die Einspritzmenge je Voreinspritzung vom Zylinderdruck abhängig ist. Insbesondere bei noch geringen Zylinderdrücken werden geringe Voreinspritzmengen in den jeweiligen Zylinder eingebracht, um eine Benetzung der Zylinderlaufbuchse mit Zündfluid zu vermeiden.

Die Erfindung wird vorzugsweise bei Dual-Fuel-Motoren im Gaskraftstoffbetriebsmodus genutzt. Die Erfindung kann jedoch auch bei Motoren zum Einsatz kommen, in denen ausschließlich ein gasförmiger Kraftstoff unter Verwendung eines Zündfluids verbrannt wird, die also im Unterschied zu Dual-Fuel-Motoren über keinen Flüssigkraftstoffbetriebsmodus verfügen.

Die Erfindung betrifft weiterhin eine Steuerungseinrichtung eines Motors zur Durchführung des erfindungsgemäßen Verfahrens. Bei der Steuerungseinrichtung handelt es sich vorzugsweise um ein Motorsteuergerät. Dasselbe umfasst Mittel zur Durchführung des Verfahrens, wobei es sich bei diesen Mitteln um hardwareseitige Mittel und um softwareseitige Mittel handelt. Die hardwareseitigen Mittel umfassen Datenschnittstellen, um mit den an der Durchführung des erfindungsgemäßen Verfahrens beteiligten Baugruppen Daten auszutauschen. Weiterhin umfassen die hardwareseitigen Mittel einen Speicher zur Datenspeicherung und einen Prozessor zur Datenverarbeitung. Bei softwareseitigen Mitteln handelt es sich um Programmbausteine zur Durchführung des erfindungsgemäßen Verfahrens.

## Patentansprüche

1. Verfahren zum Betreiben eines vorzugsweise als Dual-Fuel-Motor ausgebildeten Motors, der mehrere Zylinder (2) umfasst, wobei zur Verbrennung eines Gas/Luft-Gemischs aus einem gasförmigen Kraftstoff und Luft das Gas/LuftGemisch unter Verwendung eines Zündfluids in den Zylindern (2) gezündet wird, wobei im Bereich jedes Zylinders (2) in einem Arbeitstakt desselben zuerst der gasförmige Kraftstoff und die Luft des Gas/Luft-Gemischs und nachfolgend zur Steuerung des Verbrennungsbeginns das Zündfluid über eine Haupteinspritzung in den jeweiligen Zylinder (2) eingebracht wird, **dadurch gekennzeichnet, dass** in dem jeweiligen Arbeitstakt nach dem Einbringen des Gas/Luft-Gemischs in den jeweiligen Zylinder (2) und vor der Haupteinspritzung ebenfalls Zündfluid über mindestens eine Voreinspritzung in den jeweiligen Zylinder (2) eingebracht wird, wobei die Einspritzmenge der oder jeder Voreinspritzung in Abhängigkeit vom Zylinderdruck bestimmt wird.

2. Verfahren nach Anspruch 1, **dadurch gekennzeichnet, dass** die Einspritzmenge der jeweiligen Voreinspritzung in Abhängigkeit von dem Zylinderdruck bestimmt wird, der zum Zeitpunkt der jeweiligen Voreinspritzung im jeweiligen Zylinder herrscht.

3. Verfahren nach Anspruch 1 oder 2, **dadurch gekennzeichnet, dass** in dem jeweiligen Arbeitstakt das Zündfluid in mindestens zwei aufeinanderfolgenden Voreinspritzungen in den jeweiligen Zylinder (2) eingebracht wird.

4. Verfahren nach einem der Ansprüche 1 bis 3, **dadurch gekennzeichnet, dass** die Einspritzmenge der jeweiligen Voreinspritzung in Abhängigkeit von einem jeweiligen gemessenen Zylinderdruck bestimmt wird.

5. Verfahren nach einem der Ansprüche 1 bis 3, **dadurch gekennzeichnet, dass** die Einspritzmenge der jeweiligen Voreinspritzung in Abhängigkeit von einem jeweiligen Zylinderdruck bestimmt wird, der abhängig von einem jeweiligen Ladedruck und einer jeweiligen Kolbenstellung bestimmt wird.

6. Verfahren nach einem der Ansprüche 1 bis 5, **dadurch gekennzeichnet, dass** die Einspritzmenge der jeweiligen Voreinspritzung in Abhängigkeit vom jeweiligen Zylinderdruck derart bestimmt wird, dass sich bei der jeweiligen Voreinspritzung das Zündfluid in einem Brennraum des jeweiligen Zylinders maximal ausbreitet ohne eine Zylinderlaufbuchse desselben zu benetzen.

7. Verfahren nach einem der Ansprüche 1 bis 6, **dadurch gekennzeichnet, dass** in dem jeweiligen Arbeitstakt die oder jede Voreinspritzung in einem Kurbelwellenwinkelbereich zwischen 240°KW vor OT und 40°KW vor OT, bevorzugt zwischen 200°KW vor OT und 40°KW vor OT, besonders bevorzugt zwischen 160°KW vor OT und 40°KW vor OT, erfolgt.

8. Verfahren zum Betreiben eines vorzugsweise als Dual-Fuel-Motor ausgebildeten Motors, der mehrere Zylinder (2) umfasst, wobei zur Verbrennung eines Gas/Luft-Gemischs aus einem gasförmigen Kraftstoff und Luft das Gas/LuftGemisch unter Verwendung eines Zündfluids in den Zylindern (2) gezündet wird, wobei im Bereich jedes Zylinders (2) in einem Arbeitstakt desselben zuerst der gasförmige Kraftstoff und die Luft des Gas/Luft-Gemischs und nachfolgend zur Steuerung des Verbrennungsbeginns das Zündfluid über eine Haupteinspritzung in den jeweiligen Zylinder (2) eingebracht wird, **dadurch gekennzeichnet, dass** in dem jeweiligen Arbeitstakt nach dem Einbringen des Gas/Luft-Gemischs in den in den jeweiligen Zylinder (2) und vor der Haupteinspritzung ebenfalls Zündfluid über mindestens eine Voreinspritzung in den jeweiligen Zylinder (2) eingebracht wird, wobei die oder jeder Voreinspritzung in dem jeweiligen Arbeitstakt in einem Kurbelwellenwinkelbereich zwischen 240°KW vor OT und 40°KW vor OT, bevorzugt zwischen 200°KW vor OT und 40°KW vor OT, besonders bevorzugt zwischen 160°KW vor OT und 40°KW vor OT, erfolgt.

9. Verfahren nach Anspruch 8, **dadurch gekennzeichnet, dass** dasselbe nach einem der Ansprüche 1 bis 6 weitergebildet ist.

10. Steuerungseinrichtung eines Motors, **dadurch gekennzeichnet, dass** dasselbe das Verfahrens nach einem der Ansprüche 1 bis 9 steuerungsseitig ausführt.
